# EUROPEAN PATENT SPECIFICATION

(11) **EP 3 165 411 B1**
(45) Date of publication and mention of the grant of the patent: **05.09.2018**
(21) Application number: 16191332.2
(22) Date of filing: 29.09.2016
(51) Int. Cl.: B60R 22/00

(54) **SEATBELT FOR PREGNANT WOMEN**
SITZGURT FÜR SCHWANGERE FRAUEN
CEINTURE DE SECURITE POUR FEMMES ENCEINTES

(30) Priority: 03.11.2015 ES 201531193 U
(43) Date of publication of application: 10.05.2017
(73) Proprietor: JANE, S.A., 08184 Palau Solità i Plegamans Barcelona (ES)
(72) Inventor: Jané Santamaria, Manuel, 08184 PALAU SOLITA I PLEGAMANS (ES)
(74) Representative: Ponti & Partners, S.L.P

(56) References cited:
- EP-A2- 1 193 143
- US-A1- 2004 178 668
- US-A1- 2015 239 426

## Description

### OBJECT OF THE INVENTION

### A seatbelt for pregnant women

### FIELD OF THE INVENTION

This seatbelt for pregnant women is applied to seatbelts for an automobile or similar, as an accessory for the protection of the user's abdomen.

### BACKGROUND OF THE INVENTION

As is generally known, automobiles have seatbelts for each seat with three points of attachment: one on the upper side and one on each side of the seat lower down, with one side attached and the other having a separable fastener. When the seatbelt is in use, one section runs diagonally across the user's chest and another section crosses horizontally over the abdomen.

When pregnant women use these seatbelts, and the brakes are hit suddenly, or there is a collision or crash with another vehicle, the transversal section of the automobile's seatbelt causes a pressure on the user's abdomen that can cause injury, especially to the uterus and the pregnant woman's foetus, possibly even causing a miscarriage.

Attempts have been made to solve this problem with special seatbelts for pregnant women that are added as an accessory to the automobile's seatbelt, moving the transversal section of the seatbelt to the lower part of the abdomen.

These special seatbelts generally comprise a pillow that the user sits on, and which is joined to the means of attachment of the automobile's seatbelt, there being seatbelts for users with skirts and others for users with trousers, so the user will need to have two seatbelts to use, depending on whether she is wearing a skirt or dress or trousers.

European patent no. EP1193143A2 is a prior document, which discloses a security device for the belt of a vehicle seat that comprises a cushion, which comprises in the front ends respective guides in which passes the lower end of the belt of the seat in a horizontal disposition between said guides and that is located over the legs of the user. In this rear portion, the cushion comprises a belt for fastening it to the vehicle seat. Document US 2004/0178668 A1 discloses a seatbelt according to the preamble of claim 1.

### SUMMARY OF THE INVENTION

The object of this invention is a seatbelt for pregnant women that can be used in both cases, whether she is wearing a dress or skirt or trousers.

Besides the economy that this represents, needing to buy only one seatbelt for pregnant women and not two, there is also another practical issue. The object of the invention is solved by a seabelt for pregnant women according to claim 1. This seatbelt for pregnant women comprises a cushion that has a central opening and two openings located at the two front corners, and two belts, with fasteners at the ends, which go from the back corners of the cushion and can pass either through the front openings or the middle opening.

The fasteners, which attach to the transversal section of the seatbelt of the automobile, are double, each one used according to the selection made for using the seatbelt, whether the user is wearing a dress or skirt, or trousers.

The cushion comprises in the back part the attachment of a belt to attach it to the seat of the automobile.

As has been mentioned above, this seatbelt for pregnant women is applied to seatbelts for an automobile, as an accessory to protect the user's abdomen, although it could also be applied to other types of seats that have seatbelts, such as a seat on a ride.

These and other features can be seen better in the following detailed description, which is accompanied by four drawings that show a practical case of the use, mentioned only as an example, not limiting the scope of the present invention.

### DESCRIPTION OF THE DRAWINGS

Figure 1 shows a view of the seatbelt for pregnant women, which is the object of this invention, totally extended and seen from above.
Figure 2 shows a view from above of the seatbelt prepared for use with a skirt or dress.
Figure 3 is a side view of the seatbelt in the position of use shown in figure 2 and arranged on the seat of an automobile.
Figure 4 shows the use of the seatbelt when the pregnant woman is wearing a dress or skirt, with the detail -A-of the fastening of the transversal section of the seatbelt of the automobile.
Figure 5 shows a view from above of the arrangement of the seatbelt prepared for use with trousers.
Figure 6 is a side view of the seatbelt in the position of use shown in figure 5, arranged on the seat of an automobile.
Figure 7 shows how the seatbelt is used if it is used when the pregnant woman is wearing trousers, with the detail -B- of its fastening in the transversal section of the seatbelt of the automobile.

### DETAILED DESCRIPTION OF A PREFERABLE FORM:

According to the drawings, the seatbelt for pregnant women comprises a cushion (1) that has an opening in the middle (2) and two openings (3 and 4) located on the front corners, as well as two belts (5 and 6), with fasteners (7 and 8) at the ends, which come from the back corners of the cushion (1) and can go through either the front openings (3 and 4) or the middle opening (2).

The fasteners (7 and 8) are double, and in this case are click fasteners that constitute the first means of fastening the fastener (9-9') and the second means of fastening the fastener (10-10').

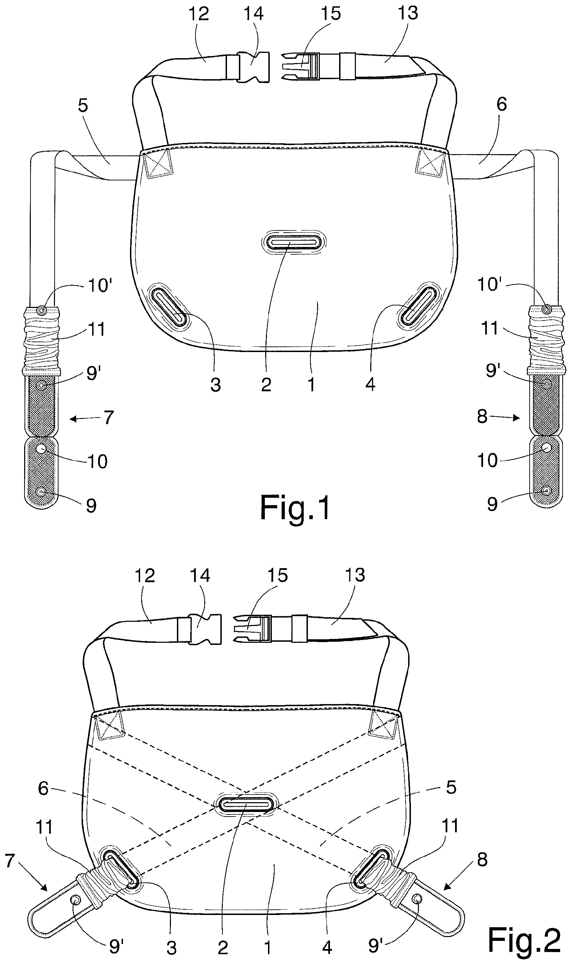

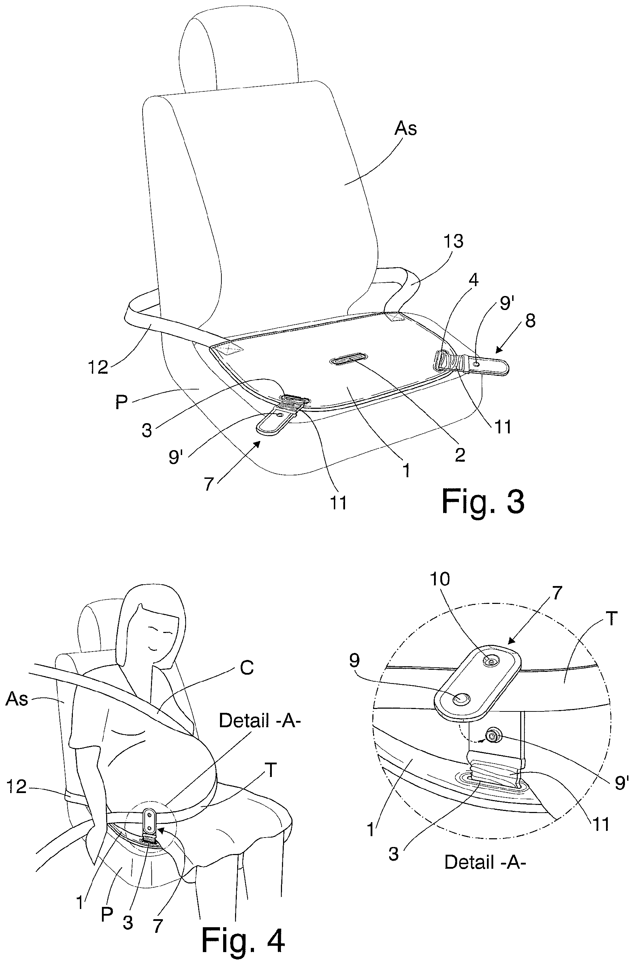

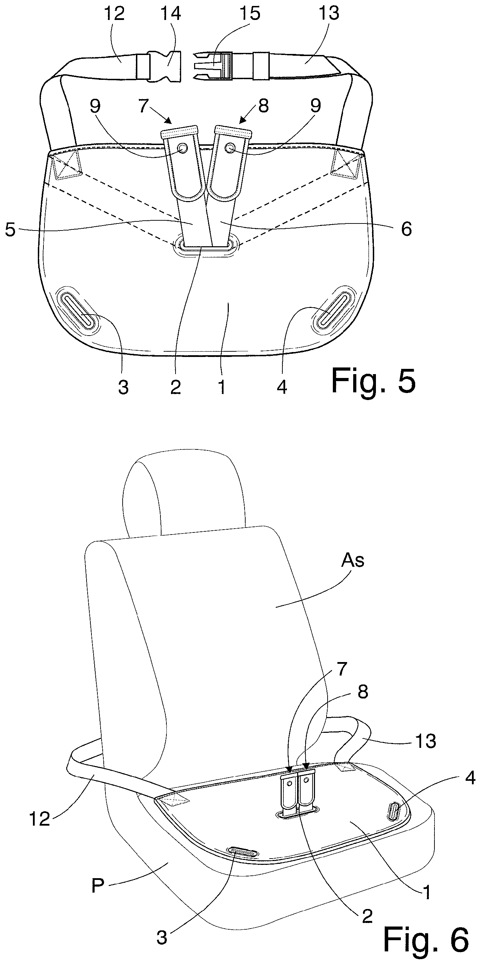

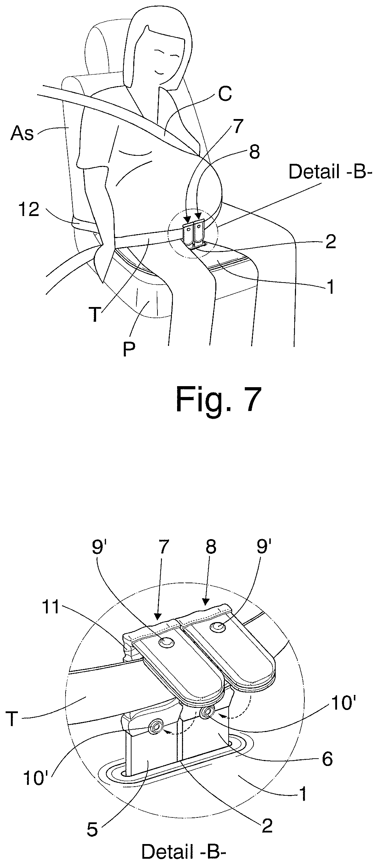

In the case of figures 1 to 4 the fastener is used (9-9') to fasten the horizontal section (T) of the seatbelt (C) of the automobile, and in figures 1 and 5 to 7 the fastener is used (10-10').

For better adaptability of these connections, the belts (5 and 6) can optionally have elastic sections at the ends of the fasteners (11).

The cushion (1) is joined to the seat (As) of the automobile using a belt with two sections (12) and (13) which are connected to the back corners of the cushion (1) and which at the other end comprise two pieces (14 and 15) of a buckle or a similar system to join it to the back part of the seat (As) of the automobile in an extractable manner.

Alternatively, the belt can be made up of a single section, the ends of which are connected respectively to the back corners of the cushion (1) and which is made of an elastic material that allows it to be attached to the back part of the seat (As) of the automobile.

In order to increase the safety of the arrangement of the cushion (1) on the part of the seat 5 (P) of the automobile (As), a non-slip surface can optionally be placed on the back of the cushion.

The invention, essentially, can be put into practice with other forms, differing only in the detail of that indicated as an example, which will also achieve the protection granted.

Thus, this seatbelt for pregnant women could be manufactured in any shape and size, with suitable means and materials, and with the most suitable accessories, with the elements that make it up being replaced by other technically equivalent ones, all of this within the following claims.

## Claims

1. Seatbelt for pregnant women, complementary to the seatbelt (C) of the automobile, comprising a cushion (1) that has a means to be attached to the seatbelt (C) of the automobile, **characterised in that** the cushion (1) has a middle opening (2) and two openings (3, 4) located in the front corners, and comprises two belts (5, 6), with fasteners at the ends (7, 8), which go from the back corners of the cushion (1) and that are selectively passed through either the front openings (3, 4) or the middle opening (2).

2. Seatbelt for pregnant women, according to claim 1, wherein the fasteners at the ends (7, 8) are double, each used according to the selection made for using the seatbelt (C).

3. Seatbelt for pregnant women, according to claim 1, wherein the belts (5, 6) have an elastic section (11) in the area where the fasteners at the ends (7, 8) are.

4. Seatbelt for pregnant women, according to claim 1, wherein the cushion (1) comprises the joining of the ends (14,15) of a belt (12,13) at the back corners.

5. Seatbelt for pregnant women, according to claim 1, wherein the back of the cushion (1) has a non-slip surface.

## Patentansprüche

1. Sicherheitsgurt für schwangere Frauen als Ergänzung zum KraftfahrzeugSicherheitsgurt (C), der ein Kissen (1) aufweist, das eine Einrichtung zum Anbringen an dem Kraftfahrzeugsicherheitsgurt (C) aufweist, **dadurch gekennzeichnet, dass** das Kissen (1) eine mittlere Öffnung (2) und zwei Öffnungen (3, 4), die in den vorderen Ecken angeordnet sind, aufweist, und zwei Gurte (5, 6) mit Befestigungsvorrichtungen an den Enden (7, 8) aufweist, die von den hinteren Ecken des Kissens (1) ausgehen und die selektiv entweder durch die vorderen Öffnungen (3, 4) oder die mittlere Öffnung (2) geleitet werden.

2. Sicherheitsgurt für schwangere Frauen gemäß Anspruch 1, bei dem die Befestigungsvorrichtungen an den Enden (7, 8) doppelt sind, wobei jede gemäß der Auswahl verwendet wird, die für die Verwendung des Sicherheitsgurts (C) getroffen wurde.

3. Sicherheitsgurt für schwangere Frauen gemäß Anspruch 1, bei dem die Gurte (5, 6) in dem Bereich, in dem sich die Befestigungsvorrichtungen an den Enden (7, 8) befinden, einen elastischen Abschnitt (11) aufweisen.

4. Sicherheitsgurt für schwangere Frauen gemäß Anspruch 1, bei dem das Kissen (1) die Verbindung der Enden (14, 15) eines Gurts (12, 13) an den hinteren Ecken aufweist.

5. Sicherheitsgurt für schwangere Frauen gemäß Anspruch 1, bei dem die Rückseite des Kissens (1) eine rutschfeste Oberfläche aufweist.

## Revendications

1. Ceinture de sécurité pour femmes enceintes, complémentaire de la ceinture de sécurité (C) de l'automobile, comprenant un coussin (1) qui a un moyen pour être fixé à la ceinture de sécurité (C) de l'automobile, **caractérisé en ce que** le coussin (1) a une ouverture centrale (2) et deux ouvertures (3, 4) positionnées dans les coins avant, et comprend deux sangles (5, 6), avec des fixations au niveau des extrémités (7, 8), qui viennent des coins arrières du coussin (1) et qui passent sélectivement par les ouvertures avant (3, 4) ou l'ouverture centrale (2).

2. Ceinture de sécurité pour femmes enceintes selon la revendication 1, dans laquelle les fixations au niveau des extrémités (7, 8) sont doubles, chacune utilisée selon la sélection réalisée pour utiliser la ceinture de sécurité (C).

3. Ceinture de sécurité pour femmes enceintes selon la revendication 1, dans laquelle les sangles (5, 6) ont une section élastique (11) dans la zone où sont les fixations au niveau des extrémités (7, 8).

4. Ceinture de sécurité pour femmes enceintes selon la revendication 1, dans laquelle le coussin (1) comprend l'assemblage des extrémités (14, 15) d'une sangle (12, 13) au niveau des coins arrière.

5. Ceinture de sécurité pour femmes enceintes selon la revendication 1, dans laquelle l'arrière du coussin (1) a une surface antiglisse.
